# FASCICULE DE BREVET EUROPEEN

(11) **EP 1 574 002 B1**
(45) Date de publication et mention de la délivrance du brevet: **10.01.2007**
(21) Numéro de dépôt: 03767857.0
(22) Date de dépôt: 29.10.2003
(51) Int. Cl.: H04L 29/06, G06F 1/00

(54) **Procédé de communication de confiance entre deux unites**
Verfahren zur vertrauenswürdigen Kommunikation zwischen zwei Einheiten
Confidence communication method between two units

(30) Priorité: 18.12.2002 FR 0216091
(43) Date de publication de la demande: 14.09.2005
(73) Titulaire: FRANCE TELECOM, 75015 Paris (FR)
(72) Inventeur: DE BOURSETTY, Benoît, F-75015 Paris (FR); GRUSON, Manuel, F-75014 Paris (FR); MOUTON, Dimitri, F-75015 Paris (FR)
(74) Mandataire: Fréchède, Michel
(86) Numéro de dépôt international: PCT/FR2003/003225
(87) Numéro de publication internationale: WO 2004/066581

(56) Documents cités:
- US-B1- 6 275 938
- QUSAY MAHMOUD: "Wireless Java Security " JAVA SUN, [en ligne] janvier 2002 (2002-01), XP002249490 Extrait de l'Internet: <URL:http://wireless.java.sun.com/midp/art icles/security/> [extrait le 2003-07-30]
- DOMINIC LOBO: "A Nokia View on Java Technology" NOKIA MOBILE PHONES, [en ligne] 6 juin 2002 (2002-06-06), XP002249491 Extrait de l'Internet: <URL:http://www.javatech.dk/javatech2/slid es/Nokia/Nokia.html> [extrait le 2003-07-30]
- NAM-JE PARK ET AL: "M-commerce security platform based on WTLS and J2ME" INDUSTRIAL ELECTRONICS, 2001. PROCEEDINGS. ISIE 2001, vol. 3, 12 juin 2001 (2001-06-12), pages 1775-1780, XP010548897

## Description

La présente invention concerne les terminaux informatiques personnels permettant à des utilisateurs d'accéder à des services en ligne.

De tels terminaux peuvent notamment être des téléphones utilisant le protocole d'application sans fil (WAP, "wireless application protocol"), des ordinateurs de bureau, des ordinateurs portables ou des assistants numériques personnels (PDA, "personal digital assistant"). Ils ont en commun la caractéristique d'être reliés à un réseau de données numérique, qui dans beaucoup de cas pratiques est un réseau fonctionnant selon le protocole IP ("Internet protocol"), notamment l'Internet.

Dans ces terminaux, il est possible d'installer diverses applications. Parmi ces applications, il est fréquemment fait une distinction selon divers critères tels que leur origine, le degré de confiance qui leur est accordé par un administrateur, etc., qui résulte en des capacités différentes pour certaines applications par rapport à d'autres.

Par exemple dans les systèmes fonctionnant sous le système d'exploitation dit "Unix", les droits d'exécution des applications de classe "setuid root" sont les droits maximaux, de niveau administrateur, alors que les droits d'exécution des autres applications sont simplement les droits de l'utilisateur qui lance l'application. Autre exemple, dans les navigateurs web comportant une machine virtuelle Java, les applications, appelées "applets", téléchargées depuis un site web donné sont limitées quant à leurs capacités d'accéder au réseau, c'est-à-dire qu'elles ne peuvent émettre des requêtes du protocole HTTP ("hypertext transfer protocol") que vers ce site web.

Certains de ces droits d'exécution des applications sont purement locaux. C'est le cas par exemple du droit de prendre le contrôle de l'écran d'un terminal, ou du droit d'avoir connaissance de toutes les touches enfoncées sur le clavier du terminal, même pour d'autres applications.

Mais d'autres droits d'exécution sont observables à distance. C'est le cas par exemple du droit d'émettre des paquets IP quelconques, y compris des paquets IP qui ne se conformeraient pas aux formats des protocoles de transport les plus courants, à savoir TCP ("transmission control protocol") ou UDP ("user datagram protocol"). Dans les systèmes Unix, ce droit n'est pas donné aux applications qui ne sont pas de classe "setuid root". En utilisant cette différence de capacité d'envoi de requêtes, un observateur à distance tel qu'un serveur peut déterminer qu'un paquet donné a été émis par une application de classe "setuid root": s'il observe que ce paquet ne se conforme pas au format TCP ou UDP, il s'agit forcement d'une application de classe "setuid root"; sinon, il se peut qu'il s'agisse d'une application sans droits privilégiés.

Dans le cas des applets dans les navigateurs, sur les ordinateurs personnels, les capacités d'envoyer des requêtes HTTP sont limitées au seul site d'où l'applet a été téléchargée. Pour chaque requête HTTP reçue, un serveur web peut donc déduire qu'elle provient soit d'une applet présente sur le site soit d'une autre application (par exemple le navigateur). Mais en tout cas, les requêtes reçues par un serveur web ne proviennent pas d'applets "étrangères" présentes sur d'autres sites.

On s'intéresse ici au problème de savoir comment un serveur peut recueillir de façon sécurisée l'accord de l'utilisateur sur une question donnée. La question à poser à l'utilisateur doit être présentée à l'utilisateur par l'intermédiaire d'une application sur son terminal. L'application recueille l'accord (ou le désaccord) de l'utilisateur, puis transmet une indication correspondante au serveur.

Le serveur reçoit donc des messages sur le réseau et les interprète comme l'accord (ou désaccord) de l'utilisateur. Il doit pour cela faire l'hypothèse que l'application a bien présenté la question à l'utilisateur et a recueilli son accord en toute honnêteté. Le serveur suppose donc que l'application n'est pas un "cheval de Troie" qui aurait par exemple présenté une question différente à l'utilisateur, ou bien qui n'aurait tout simplement pas présenté la question à l'utilisateur mais fait comme si celui-ci avait été d'accord. Pour protéger l'utilisateur contre d'éventuels programmes du genre "cheval de Troie", il importe de s'assurer de cette hypothèse de confiance.

Il existe plusieurs moyens de satisfaire raisonnablement cette hypothèse de confiance en l'application.

Certaines applications sont reconnues être "de confiance". Une telle application est par exemple le navigateur WAP. Un serveur peut avoir confiance en un navigateur WAP pour qu'il affiche une page posant une question à l'utilisateur et attende que l'utilisateur saisisse sa réponse.

Dans le cas d'un terminal "fermé" (exemple: un Minitel), les applications présentes sur le terminal sont connues et ne peuvent pas être changées au cours de la vie du terminal. Toutes ces applications sont reconnues "de confiance".

L'ouverture d'un terminal fait référence à la possibilité offerte à l'utilisateur d'installer, et souvent de télécharger, de nouvelles applications destinées à être exécutées par le terminal lui-même. Des exemples de terminaux "ouverts", intégrant cette possibilité, sont:
- les téléphones à téléchargement d'applications, par exemple de type Java MIDP ("Mobile Information Device Profile", Sun Microsystems, Inc.);
- les navigateurs possédant des fonctionnalités dites de scripting, par exemple de type WMLScript (voir "WAP WMLScript Language Specification", version 1.1, WAP Forum, novembre 2001) ou ECMAScript (aussi appelé JavaScript, voir "ECMAScript Language Specification", Standard ECMA-262, 3^{e} édition, décembre 1999), ou accueillant des applets;
- la plupart des PDA, fonctionnant sous les systèmes d'exploitation PalmOS, WindowsCE, Symbian etc.;
- les ordinateurs de bureau ou portables.

Les terminaux "semi-ouverts" sont les terminaux ouverts dont certaines fonctionnalités ne sont pas directement accessibles aux applications installées par l'utilisateur ou téléchargées. Par exemple, dans un terminal dont la seule "ouverture" est ECMAScript, les applications téléchargées ne peuvent pas accéder à toutes les fonctionnalités du réseau (par exemple, émettre des paquets IP quelconques). Ces fonctionnalités peuvent être accessibles de façon indirecte et contrôlée. Par exemple, une fonction ECMAScript peut commander le chargement d'une page via HTTP, ce qui utilise le réseau mais d'une façon contrôlée.

Dans des terminaux "semi-ouverts", il y a coexistence:
- d'applications considérées comme "de confiance", par exemple parce qu'elles ont été installées en usine par le fabricant du terminal, ou bien du fait de la garantie procurée par des moyens tels que la signature électronique de l'application etc.;
- et d'autres applications qui peuvent être installées sur le terminal par l'utilisateur lui-même, à son libre choix, mais n'accèdent pas aux mêmes droits que les applications de confiance.

Les terminaux "complètement ouverts", par opposition, sont les terminaux ouverts dans lesquels toutes les fonctionnalités sont accessibles aux applications téléchargées. La notion d'ouverture d'un terminal dépend dans une large mesure du contexte dans lequel on se place. Par exemple, différentes couches du modèle OSI (lien / réseau / session / transport / ...) peuvent avoir différents degrés d'ouverture.

On s'intéresse ici aux fonctionnalités observables à distance, depuis un serveur, c'est-à-dire aux fonctionnalités de réseau. Dans ce cadre, le caractère "semi-ouvert" d'un terminal implique généralement que des droits d'exécution observables à distance, accessibles aux applications de confiance, ne sont pas accessibles aux applications sans confiance (par exemple, le droit d'émettre des requêtes autres que HTTP sur un réseau IP). Ceci permet à un serveur de distinguer, parmi les requêtes qui lui arrivent, celles qui proviennent d'applications de confiance et celles qui proviennent d'autres applications.

Le document " Wireless Java Security", XP2249490, divulgue des terminaux informatiques personnels permettant à des utilisateurs d'accéder à des services en ligne. Dans ces terminaux il y a des applications considérées comme "de confiance" et "sans confiance".

Les "applets", que l'utilisateur installe à son libre choix, ne sont pas forcément de confiance pour accéder à n'importe quel serveur. Cependant, la restriction des requêtes de chaque applet au site d'où elle a été téléchargée permet à un site web de garder le contrôle sur les applets qui peuvent émettre des requêtes vers lui. Il est donc raisonnable que le serveur suppose que les applications présentant des questions à l'utilisateur ne sont pas des Chevaux de Troie. Ces applications sont donc "de confiance", mais pour un site web uniquement.

Dans les terminaux ouverts, il faut tenir compte de la possibilité qu'un programme se comporte de façon trompeuse vis-à-vis de l'utilisateur (cheval de Troie). Ainsi, rien ne peut garantir à un serveur qu'une requête provient bien de l'utilisateur, et non d'un programme ayant simulé l'accord de l'utilisateur au niveau du réseau. Ce risque ruine la confiance que le serveur peut avoir dans les données qu'il reçoit d'un client. L'hypothèse selon laquelle les requêtes adressées au serveur reflètent les actions de l'utilisateur n'est pas raisonnable si un cheval de Troie a la possibilité de les envoyer à la place de l'utilisateur.

La réponse classique au risque de cheval de Troie est de limiter les capacités des applications sans confiance.

La limitation de l'émission des trames depuis les terminaux semi-ouverts se fait généralement de façon extrêmement stricte. Seules les applications de confiance sont autorisées à émettre certaines trames. Cette distinction est utilisée pour que le serveur n'accepte pas comme représentatives de l'accord de l'utilisateur des trames émises par des applications sans confiance, susceptibles de trahir l'utilisateur.

Il devient donc impossible à une application sans confiance d'émettre des trames vers un serveur. Il est notamment impossible pour cette application de prouver à ce serveur l'accord de l'utilisateur. Par exemple, il est impossible à une application sans confiance de proposer à l'utilisateur de payer en utilisant un serveur de commerce électronique.

Pour une « applet », qui est restreinte à ne pouvoir émettre des requêtes que vers le site web d'où elle a été téléchargée, la confiance n'est accordée que pour ce serveur. Il est donc possible à cette applet de recueillir l'accord de l'utilisateur et de transmettre le résultat au site web d'où elle a été téléchargée. On fait alors l'hypothèse - raisonnable - que le serveur n'a jamais proposé de télécharger des applications de type "cheval de Troie".

Des systèmes à base de cryptographie existent pour générer des signatures électroniques. Un exemple en est décrit dans la spécification "WAP WMLScript Crypto Library", WAP Forum, juin 2001. Ces systèmes peuvent être utilisés pour recueillir l'accord de l'utilisateur, ils font l'hypothèse que le système est semi-ouvert, c'est-à-dire en l'occurrence que les fonctions d'accès aux clés cryptographiques ne sont pas directement disponibles aux applications sans confiance. L'accès aux clés cryptographiques est géré par un composant logiciel particulier, que nous appelons "composant de signature électronique", chargé de recueillir l'accord de l'utilisateur pour le compte de l'application. Ce composant effectue de lui-même l'enchaînement d'opérations suivant pour le compte d'applications sans confiance:
- afficher le texte à signer à l'écran;
- attendre confirmation de l'utilisateur;
- si une confirmation est reçue, utiliser les clés cryptographiques de l'utilisateur pour signer le texte affiché;
- sinon, ne pas signer le texte affiché.

Ceci permet donc à des applications sans confiance d'obtenir une signature électronique de l'accord de l'utilisateur via le composant de signature électronique. Ce procédé permet au serveur d'obtenir l'accord de l'utilisateur par rapport à un texte quelconque.

Il faut ici faire l'hypothèse que le terminal n'est pas complètement ouvert. S'il était possible à une application sans confiance d'accéder directement aux fonctions cryptographiques, on ne pourrait pas savoir si l'appel aux fonctions cryptographiques a bien été précédé d'un affichage de la totalité du texte à signer ou si le terminal a bien attendu l'accord de l'utilisateur avant de procéder à la signature.

D'autre part, ce procédé met en oeuvre des techniques cryptographiques, qui peuvent s'avérer coûteuses en temps d'exécution, en taille de messages échangés sur le réseau ainsi qu'en consommation électrique (important pour les terminaux portables). De plus, la législation sur les techniques cryptographiques peut éventuellement restreindre la possibilité de recourir à ce procédé.

Il est donc souhaitable de fournir un comportement quasiment équivalent en termes d'ouverture aux applications sans confiance, mais sans recourir à la cryptographie.

Un but de la présente invention est de permettre à une application "sans confiance" en milieu semi-ouvert de recueillir l'accord de l'utilisateur sur une question donnée, et d'en avertir un serveur distant en lui prouvant que cela a été fait de façon honnête.

L'invention propose ainsi un procédé de communication entre une première unité et une seconde unité par l'intermédiaire d'un réseau de télécommunication, dans lequel la première unité comporte une première famille d'applications et une seconde famille d'applications ayant des capacités de communication sur le réseau au-delà des capacités de communication des applications de la première famille. Selon l'invention, ce procédé comprend les étapes suivantes:
/a/ un composant de confiance appartenant à la seconde famille d'applications obtient l'énoncé d'une question à poser à un utilisateur de la première unité dans le cadre de l'exécution d'une application de la première famille;
/b/ le composant de confiance présente la question par l'intermédiaire d'une interface d'utilisateur et recueille une réponse de l'utilisateur; et
/c/ pour au moins un type de réponse de l'utilisateur, le composant de confiance transmet à la seconde unité, par l'intermédiaire du réseau, au moins un message identifiant la question présentée et indiquant la réponse recueillie, ledit message étant transmis dans des conditions inaccessibles aux applications de la première famille.

Un autre aspect de la présente invention se rapporte à un composant logiciel de confiance pour la mise en oeuvre du procédé ci-dessus au niveau de ladite première unité, ainsi qu'un terminal de communication, incorporant un tel composant logiciel de confiance. Ce composant de confiance appartient à la seconde famille d'applications précitée et inclut des instructions pour commander les étapes suivantes lors de son exécution dans la première unité:
/a/ obtenir l'énoncé d'une question à poser à un utilisateur de la première unité dans le cadre de l'exécution d'une application de la première famille;
/b/ présenter la question par l'intermédiaire d'une interface d'utilisateur et recueillir une réponse de l'utilisateur; et
/c/ pour au moins un type de réponse de l'utilisateur, transmettre à la seconde unité, par l'intermédiaire du réseau, au moins un message identifiant la question présentée et indiquant la réponse recueillie, ledit message étant transmis dans des conditions inaccessibles aux applications de la première famille.

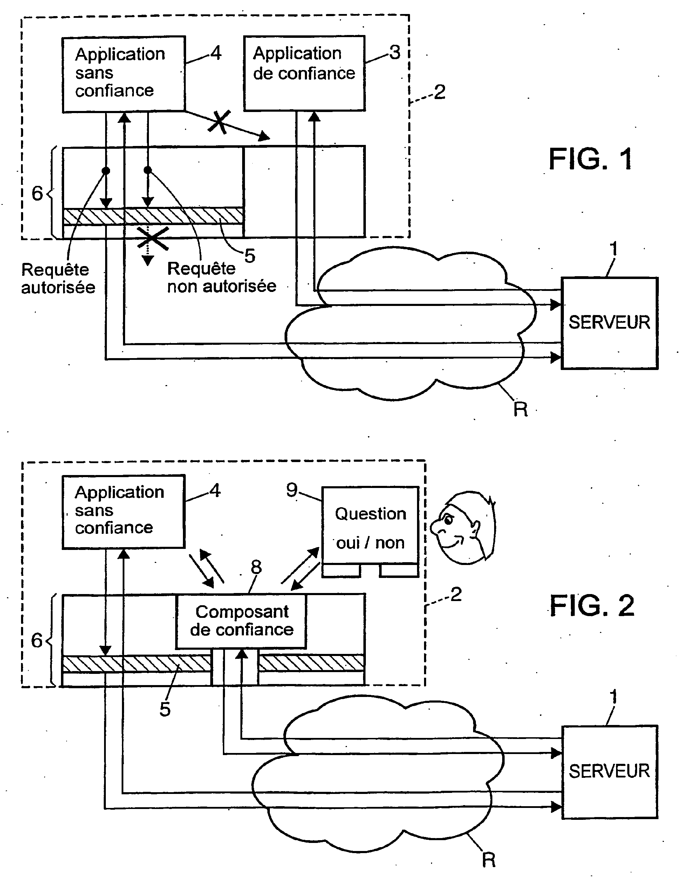

D'autres particularités et avantages de la présente invention apparaîtront dans la description ci-après d'exemples de réalisation non limitatifs, en référence aux dessins annexés, dans lesquels les figures 1 et 2 sont des schémas d'un système mettant en oeuvre l'invention.

On cherche à permettre à une unité distante telle qu'un serveur 1 d'obtenir de façon sûre et souple l'accord de l'utilisateur d'un terminal semi-ouvert 2 relativement à une question donnée. L'accord peut être obtenu par des applications de confiance 3, comme dans le cas de la navigation, mais aussi depuis des applications sans confiance 4, ayant des capacités de communication plus restreintes (voire inexistantes) sur le réseau de télécommunication R utilisé pour dialoguer avec le serveur 1.

On se place ici dans le cadre d'un terminal 2 faisant une distinction entre applications de confiance 3 et applications sans confiance 4. Cette distinction se traduit par des capacités distinctes d'émission de trames ou de requêtes sur le réseau R. Les applications sans confiance 3 sont limitées dans les trames qu'elles peuvent émettre, ce qui, dans le schéma de la figure 1, est symbolisé par une couche de contrôle 5 faisant partie des ressources 6 d'accès au réseau dont est équipé le terminal 2.

La couche de contrôle 5 vérifie que certaines propriétés sont remplies par les trames émises par les applications sans confiance 4. Si ces propriétés sont remplies, la couche de contrôle laisse passer les trames. Sinon, elle peut soit ne pas les laisser passer vers le réseau R et en prévenir l'application sans confiance 4 qui les a émises, soit modifier les trames pour les conformer aux contraintes des applications sans confiance. Dans ce dernier cas, la trame perd alors sa crédibilité aux yeux du serveur 1, qui ne l'exploitera pas.

L'invention tire parti de cette couche de contrôle 5 (dont la présence peut n'être qu'implicite et résulter de propriétés du système d'exploitation ou plus généralement de l'environnement d'exécution des applications dans le terminal semi-ouvert) pour empêcher une application sans confiance 4 d'émettre elle-même des requêtes qui prouveraient à un serveur l'accord de l'utilisateur relatif à la question posée. Une telle application ne peut donc pas elle-même recueillir l'accord de l'utilisateur sous une forme exploitable par le serveur 1.

On introduit ainsi dans le terminal 2, entre l'application sans confiance, le serveur et l'utilisateur, un composant logiciel de confiance 8 dont on s'est assuré au préalable du comportement "honnête". En pratique, cette assurance proviendra souvent du constructeur du terminal semi-ouvert. Le composant de confiance 8 ne peut pas être remplacé ou modifié par une application sans confiance, ce qui est assuré par le système semi-ouvert lui-même, pour qui une application de confiance doit rester de confiance. Il n'y a donc pas de risque que le composant 8 se comporte en cheval de Troie. Un rôle principal du composant de confiance 8 est de recueillir l'accord de l'utilisateur pour le compte d'une ou plusieurs applications sans confiance 4, au moyen d'une interface utilisateur 9 du terminal.

Le composant de confiance 8 n'est pas limité dans les requêtes qu'il peut émettre, ou du moins il subit des restrictions moins sévères que les applications sans confiance 4. Dans l'exemple schématisé par la figure 2 ci-dessus, il n'est pas contrôlé par la couche de contrôle 5.

On s'intéresse à une application 3 ou 4 qui désire prouver à un serveur distant 1 qu'elle a obtenu l'accord de l'utilisateur pour une question donnée. Elle dispose initialement de l'énoncé de la question ainsi que d'une donnée d'adressage permettant de contacter le serveur distant, par exemple une indication de type URL ("Uniform Resource Locator").

Les communications de ces applications 3, 4 sont soumises aux règles suivantes:
- les applications peuvent effectuer des communications distantes par l'intermédiaire des ressources 6 et du réseau R, mais ces communications sont limitées par le système d'exploitation semi-ouvert qui incorpore une couche logique de contrôle 5;
- tout serveur distant 1, ayant connaissance des limites appliquées, peut déterminer si les messages qu'il reçoit proviennent d'applications de confiance ou non, en examinant si les limites sont appliquées;
- le composant de confiance 8 a la possibilité d'effectuer des communications hors des limites imposées aux applications sans confiance 4, mais aussi dans ces limites s'il le souhaite, Il peut à cet égard être vu comme appartenant à la même famille que les applications de confiance 3.

Une application sans confiance qui désire obtenir l'accord de l'utilisateur sur une question donnée et prouver cet accord à un serveur distant 1 fournit au composant de confiance 8 l'énoncé de la question ainsi que l'adresse du serveur. Le composant de confiance 8 présente alors la question à l'utilisateur au moyen de l'interface 9. La décision de l'utilisateur (accepter ou refuser, l'absence de réponse passé un certain délai pouvant être interprétée comme un refus) est recueillie par le composant de confiance.

Si la décision recueillie est un accord, une requête hors des limites appliquées aux applications sans confiance est envoyée par le composant de confiance au serveur à l'adresse précédemment indiquée par l'application 4. Cette requête contient:
- l'énoncé de la question
- la réponse de l'utilisateur

Le serveur 1 vérifie, implicitement ou explicitement, que la requête a bien été transmise hors des limites appliquées aux applications sans confiance, et répond à cette requête après validation. La réponse à la requête est finalement transmise par le composant de confiance 8 à l'application sans confiance 4.

En cas de désaccord de l'utilisateur observé par le composant de confiance 8, celui-ci peut transmettre directement à l'application 4 une réponse indiquant l'échec. La réponse négative de l'utilisateur n'est qu'optionnellement transmise au serveur 1 dans ce cas.

S'il fait confiance au "composant de confiance" 8, le serveur distant 1 est assuré que les requêtes hors limites qu'il reçoit correspondent bien à des questions qui ont été posées à l'utilisateur et que le choix de l'utilisateur a été correctement recueilli. Une application sans confiance ne peut pas simuler ce comportement. Le risque de cheval de Troie est donc écarté.

Si la vérification par le serveur 1 de la requête censée indiquer l'accord de l'utilisateur montre qu'elle a été transmise dans les limites appliquées aux applications sans confiance, cette requête n'est pas interprétée comme étant représentative de l'accord de l'utilisateur. Ce refus du serveur peut optionnellement être notifié en retour au terminal.

Naturellement, la question présentée à l'utilisateur peut appeler une réponse de tout type, plus riche que "oui/non". La question peut notamment prendre la forme d'un formulaire dans lequel plusieurs entrées seraient à renseigner par l'utilisateur. Dans ce cas, les différentes entrées renseignées par l'utilisateur peuvent être transmises au serveur après que le composant de confiance 8 a demandé et obtenu une validation de la part de l'utilisateur.

Dans la description qui précède, l'application sans confiance 4 génère elle-même le texte de la question. Si on préfère que le serveur 1 génère le texte de la question, on peut par exemple procéder comme suit:
- une application sans confiance 4 soumet au composant de confiance 8 l'adresse d'un serveur 1 (par exemple une URL) et une requête appropriée à lui envoyer pour obtenir l'énoncé de la question à poser;
- le composant de confiance 8 émet la requête via le réseau R afin de demander à ce serveur 1 l'énoncé de la question. La requête est de préférence passée par la couche de contrôle 5 afin de garantir qu'elle soit dans les limites autorisées pour les applications sans confiance 4;
- le serveur 1 renvoie l'énoncé de la question, en relation avec une référence à rappeler ultérieurement lors de la transmission de l'accord de l'utilisateur;
- le composant de confiance 8 présente la question à l'utilisateur comme précédemment;
- l'utilisateur fait sa décision;
- la décision de l'utilisateur est recueillie par le composant de confiance 8;
- en cas d'accord, le composant de confiance 8 émet une requête vers le serveur 1, cette fois-ci hors des limites imposées aux applications sans confiance, en incluant la référence de l'énoncé et stipulant que l'utilisateur a bien donné son accord (la référence peut être optionnelle, auquel cas le composant de confiance répète l'énoncé de la question dans la requête transmise à cette étape; de façon générale, il suffit que la question posée soit suffisamment identifiée dans le message transmis au serveur pour indiquer l'accord de l'utilisateur);
- le serveur 1 valide la requête en vérifiant qu'elle est bien reçue hors des limites imposées aux applications sans confiance, et répond à cette requête;
- la réponse est transférée à l'application qui a initié la demande.

Comme on s'est assuré de passer la requête provenant directement de l'application sans confiance 4 par la couche de contrôle 5, le serveur 1 reste assuré que les requêtes hors limites qu'il reçoit du composant de confiance 8 résultent bien d'un accord explicite de l'utilisateur.

Dans un mode de réalisation particulier de l'invention, le terminal dispose d'une machine virtuelle Java, pouvant correspondre au module 6 dans l'illustration des figures 1 et 2. La machine virtuelle permet d'exécuter des applications téléchargées écrites dans le langage de programmation Java mis au point par la société Sun Microsystems, Inc. Toutes les instructions du langage Java sont exécutées par la machine virtuelle, qui fait appel aux fonctions système après un certain contrôle. Pour les applications Java, on est bien dans un environnement semi-ouvert puisqu'il n'y a pas d'appel sans contrôle aux fonctions système.

L'application sans confiance 4 est alors écrite en langage Java.

Dans ce mode de réalisation, les protocoles mis en jeu pour les échanges du terminal 2 sur le réseau R sont les protocoles HTTP (RFC 1945 ("Request For Comments"), publiée en mai 1996 par l'IETF ("Internet Engineering Task Force")), TCP (RFC 793, IETF, septembre 1981) et IP (RFC 791, IETF, septembre 1981). La limite appliquée aux applications sans confiance est qu'elles ne peuvent pas adresser de requêtes vers les URL de type: "http://<serveur>/<chemin>/accord?<suite>", où <serveur> est un nom de serveur quelconque, <chemin> est une suite de chaînes de caractères de la forme "répertoire_1/répertoire_2/.../répertoire_n" et <suite> est une chaîne de caractères quelconque. Cette limite est bien sûr un exemple, n'importe quelle autre limite pouvant faire l'affaire. Le service est hébergé par un serveur HTTP.

Le composant de confiance 8 peut alors être implémenté dans la machine virtuelle Java par la classe Userconfirmation. Il est accessible depuis les applications Java 4 par une fonction de classe: InputStream UserConfirmation.ask (String url, String question) dont le fonctionnement est le suivant. Lorsqu'une application sans confiance 4 appelle la fonction UserConfirmation.ask (String url, String question):
- le composant de confiance 8 ouvre une fenêtre ou bien prend le contrôle du terminal sur l'application en cours d'exécution;
- la question dont l'énoncé est donné par la chaîne de caractères "question" est affichée à l'écran, et deux choix sont proposés à l'utilisateur, à savoir "OK" et "Annuler";
- si l'utilisateur donne son accord, en choisissant "OK":
   - le composant de confiance 8 envoie sur le réseau R la requête HTTP formée par la concaténation (i) de l'URL donnée en paramètre ("url"), (ii) de la chaîne "/accord?question=", (iii) de l'énoncé de la question posée à l'utilisateur (encodée au format d'encodage dans l'URL x-www-urlencoded), et de la chaîne "&reponseOK". Ce comportement n'est bien sûr qu'un exemple qui correspond à la limitation appliquée aux requêtes sortant des applications Java. Un serveur est assuré par cette combinaison que les requêtes envoyées à ce stade par le composant de confiance n'auraient pas pu être envoyées par les applications Java, ce qui répond au besoin;
   - lorsque le composant de confiance 8 reçoit ensuite la réponse du serveur 1 (ou une exception si le serveur n'est pas disponible), il retourne à l'application appelante 4 un objet InputStream permettant à celle application de connaître la réponse du serveur;
- si l'utilisateur ne donne pas son accord, en choisissant "Annuler":
   - le composant de confiance 8 renvoie une exception à l'application appelante 4.

Pour illustrer ce mode de réalisation particulier, on considère le cas où le serveur gère un service de micropaiement effectuant des paiements en ligne pour le compte de l'utilisateur sur simple accord de ce dernier. Les paiements sont débités d'un compte correspondant à l'utilisateur. Lorsqu'il reçoit un ordre de paiement, ce service veut donc s'assurer que cet ordre est bien confirmé par l'utilisateur, et n'est pas en provenance d'un programme Java mal intentionné qui n'aurait présenté aucune question à l'utilisateur, ou bien qui lui aurait présenté une question trompeuse. Ce service est bien entendu un exemple, n'importe quel autre service demandant l'accord de l'utilisateur pouvant être réalisé grâce à cette technique (publication de documents, gestion de fichiers, messagerie, etc.)

Dans cet exemple, le service de paiement contrôle le site web "paiement.com". Lorsqu'une application sans confiance souhaite proposer un paiement à l'utilisateur, elle appelle la fonction UserConfirmation.ask en lui donnant comme paramètres:
- comme URL: http://paiement.com/paiement
- comme énoncé de question: "Payer 1∈ à Acme Co. ?"

Le composant de confiance 8 prend le contrôle du terminal 2, et demande à l'utilisateur "Payer 1€ à Acme Co.? OK / Annuler". Si l'utilisateur choisit le lien "OK", le composant de confiance émet la requête "http://paiemént.com/paiement/accord?question=payer+1€+à+Ac me+Co.?&reponse=OK" et transmet la réponse du serveur à l'application appelante 4, en lui redonnant la main.

Si l'utilisateur choisit le lien "Annuler", le composant de confiance 8 n'émet aucune requête et rétourne une exception à l'application appelante 4.

Si une application 4 tente de demander directement la page ''http://paiement.com/paiement/accord?question=payer+1€+à+Ac me+Co.?&reponse=OK", cette requête est refusée par la limitation appliquée aux applications sans confiance.

Comme autre illustration du procédé selon l'invention, on considère le cas où le serveur gère un service de commerce électronique. Dans le cadre d'un tel service, le client est amené à remplir un formulaire de commande. Ce formulaire est à envoyer selon la méthode HTTP POST à l'adresse "http://service.com/commande". Le composant de confiance peut alors être implémenté dans la machine virtuelle Java. Il est accessible des applications Java par une fonction "UserConfirmation.askForm(String url, byte[ ] formulaire)".

Lorsque cette fonction est appelée par une application Java 4, le composant de confiance 8:
- affiche à l'écran le formulaire contenu dans le tableau "formulaire" passé en paramètre de la fonction. Ce formulaire est par exemple dans un format XML;
- laisse l'utilisateur remplir les champs du formulaire et lui demande de le valider en choisissant "OK" ou "Annuler" à la fin du formulaire;
- envoie une requête HTTP POST lorsque l'utilisateur valide le formulaire, à l'URL "url+/accord?", cette requête contenant le formulaire qui a été présenté à l'utilisateur, ainsi que les données saisies par l'utilisateur dans les différents champs.

Si une application Java sans confiance 4 tente d'accéder directement à l'adresse "ur1+/accord?", la requête sera refusée par la couche de contrôle.

Par ailleurs, une application pourrait tenter d'induire en erreur l'utilisateur en lui faisant remplir un formulaire comportant les mêmes entrées que le formulaire authentique, mais avec des libellés différents. Cette attaque est également déjouée par le fait que le formulaire est transmis au serveur 1 par le composant de confiance 8. De cette façon, le serveur 1 peut en effet vérifier que le formulaire rempli par l'utilisateur est bien un formulaire légitime.

On a pris pour clarifier l'exposé un exemple simple de limitation imposée aux applications sans confiance, à savoir que certaines URL ne sont pas accessibles, ce qui est contrôlé au moment de l'émission d'une requête. Néanmoins, n'importe quelle autre limitation serait acceptable.

On peut notamment utiliser un blocage complet de tout accès au réseau R pour les applications sans confiance 4, un blocage sélectif autorisant seulement les requêtes vers le site web d'origine d'une application téléchargée, etc.

La limitation peut aussi se rapporter à un marquage spécifique associé soit aux applications sans confiance 4, soit aux applications de confiance 3. Chaque requête issue d'une application sans confiance 4, émise sur le réseau R à destination du serveur 1, est alors contrainte par la couche de contrôle 5:
/1/ soit à inclure un marquage associé à la famille des applications sans confiance,
/2/ soit à ne pas inclure un marquage associé à la famille des applications de confiance, ce marquage étant alors inclus dans certaines au moins des requêtes émises sur le réseau R et issues d'applications de confiance.

Dans le cas /1/, le composant de confiance 8 n'appose pas le marquage dans les requêtes émises pour indiquer l'accord de l'utilisateur, ce qui assure au serveur 1 que cet accord provient bien de l'utilisateur. Le composant de confiance 8 peut en revanche marquer la requête émise sur le réseau R pour obtenir l'énoncé de la question à poser dans le cas où cet énoncé n'est pas fourni directement par l'application 4.

Inversement, dans le cas /2/, le composant de confiance 8 appose le marquage dans les requêtes émises pour indiquer l'accord de l'utilisateur, et le cas échéant il ne marque pas la requête émise sur le réseau R pour obtenir l'énoncé de la question à poser.

Dans l'exemple où le composant de confiance 8 fait partie d'une machine virtuelle Java 6, le marquage du cas /1/ consiste par exemple en ce que le champ d'en-tête "User-Agent" des requêtes HTTP (cf. section 10.15 de la RFC 1945 précitée) contienne une chaîne spécifique telle que "Application sans confiance: VM Java 1.2" qui indique par sa présence que la requête n'est pas en provenance d'une application de confiance. Une mention inverse peut être prévue dans le cas /2/.

## Revendications

1. Procédé de communication entre une première unité (2) et une seconde unité (1) par l'intermédiaire d'un réseau de télécommunication (R), dans lequel la première unité comporte une première famille d'applications (4) et une seconde famille d'applications (3) ayant des capacités de communication sur le réseau au-delà des capacités de communication des applications de la première famille,
le procédé étant **caractérisé par** les étapes suivantes:
/a/ un composant de confiance (8) appartenant à la seconde famille d'applications obtient l'énoncé d'une question à poser à un utilisateur de la première unité dans le cadre de l'exécution d'une application (4) de la première famille;
/b/ le composant de confiance présente la question par l'intermédiaire d'une interface d'utilisateur (9) et recueille une réponse de l'utilisateur; et
/c/ pour au moins un type de réponse de l'utilisateur, le composant de confiance transmet à la seconde unité, par l'intermédiaire du réseau, au moins un message identifiant la question présentée et indiquant la réponse recueillie, ledit message étant transmis dans des conditions inaccessibles aux applications de la première famille.

2. Procédé selon la revendication 1, dans lequel la question présentée est identifiée dans le message de l'étape /c/ en incluant l'énoncé de la question dans ledit message.

3. Procédé selon la revendication 1 ou 2, dans lequel pour au moins un autre type de réponse traduisant un refus de l'utilisateur par rapport à la question présentée, le composant de confiance (8) indique le refus à ladite application (4) de la première famille.

4. Procédé selon la revendication 3, dans lequel pour le type de réponse traduisant un refus de l'utilisateur par rapport à la question présentée, le composant de confiance (8) ne transmet pas à la seconde unité (1) le message de l'étape /c/.

5. Procédé selon l'une quelconque des revendications précédentes, dans lequel la seconde unité (1) valide la réponse de l'utilisateur à réception du message transmis à l'étape /c/ en s'assurant qu'il a bien été transmis dans des conditions inaccessibles aux applications de la première famille.

6. Procédé selon la revendication 5, dans lequel après validation de la réponse de l'utilisateur, la seconde unité (1) retourne un message de réponse au composant de confiance (8) par l'intermédiaire du réseau (R).

7. Procédé selon la revendication 6, dans lequel le composant de confiance (8) indique à ladite application (4) de la première famille la teneur du message de réponse reçu de la seconde unité (1).

8. Procédé selon l'une quelconque des revendications précédentes, dans lequel l'énoncé de la question est indiqué directement au composant de confiance (8) à l'étape /a/ par ladite application (4) de la première famille.

9. Procédé selon la revendication 8, dans lequel ladite application (4) de la première famille indique une adresse de la seconde unité (1) avec l'énoncé de la question à l'étape /a/.

10. Procédé selon l'une quelconque des revendications 1 à 7, dans lequel l'étape /a/ comprend les sous-étapes suivantes:
/a1/ ladite application (4) de la première famille indique au composant de confiance (8) une adresse de la seconde unité (1) ainsi qu'une requête à soumettre pour obtenir l'énoncé de la question de la part de la seconde unité;
/a2/ le composant de confiance émet la requête à l'adresse indiquée, par l'intermédiaire du réseau (R);
/a3/ le composant de confiance récupère l'énoncé de la question dans une réponse à la requête retournée par la seconde unité par l'intermédiaire du réseau.

11. Procédé selon la revendication 10, dans lequel la requête est émise par le composant de confiance (8) à la sous-étape /a2/ dans des conditions accessibles aux applications de la première famille.

12. Procédé selon la revendication 10 ou 11, dans lequel la réponse à la requête retournée par la seconde unité (1) inclut en outre une référence que le composant de confiance (8) mémorise puis insère dans le message transmis à l'étape /c/ pour identifier la question présentée.

13. Procédé selon l'une quelconque des revendications précédentes, dans lequel ladite application (4) de la première famille est un programme écrit en langage Java et le composant de confiance (8) est incorporé à une machine virtuelle Java (6) dont est pourvue la première unité (2).

14. Procédé selon l'une quelconque des revendications précédentes, dans lequel les applications (3) de la seconde famille ont la capacité d'accéder, par l'intermédiaire du réseau (R), à au moins une URL associée à la seconde unité (1) et inaccessible aux applications (4) de la première famille.

15. Procédé selon l'une quelconque des revendications 1 à 13, dans lequel les applications (4) de la première famille ne sont pas capables d'accéder au réseau (R).

16. Procédé selon l'une quelconque des revendications 1 à 13, dans lequel les applications (4) de la première famille ont la capacité, dans un protocole de transfert déterminé, de n'accéder qu'à un seul site distant ne comportant pas la seconde unité (1).

17. Procédé selon l'une quelconque des revendications 1 à 13, dans lequel on contraint chaque requête issue d'une application (4) de la seconde famille, émise sur le réseau (R) à destination de la seconde unité (1), à inclure un marquage associé à la seconde famille d'applications (3).

18. Procédé selon l'une quelconque des revendications 1 à 13, dans lequel on contraint chaque requête issue d'une application (4) de la seconde famille, émise sur le réseau (R) à destination de la seconde unité (1), à ne pas inclure un marquage associé à la première famille, ledit marquage étant inclus dans certaines au moins des requêtes émises sur le réseau et issues d'applications (3) de la première famille.

19. Procédé selon la revendication 17 ou 18, dans lequel les requêtes comprennent des requêtes HTTP, et le marquage est inséré dans les en-têtes des requêtes HTTP.

20. Composant logiciel de confiance pour une première unité (2) capable de communiquer avec une seconde unité (1) par l'intermédiaire d'un réseau de télécommunication (R), la première unité comportant une première famille d'applications (4) et une seconde famille d'applications (3) ayant des capacités de communication sur le réseau au-delà des capacités de communication des applications de la première famille, le composant de confiance (8) appartenant à la seconde famille d'applications et incluant des instructions pour commander les étapes d'un procédé selon l'une quelconque des revendications 1 à 19 lors d'une exécution du composant dans la première unité.

21. Terminal de communication, incorporant un composant logiciel de confiance selon la revendication 20 pour communiquer avec une unité distante (1) par l'intermédiaire d'un réseau de télécommunication (R).

## Claims

1. Method for communication between a first unit (2) and a second unit (1) via a telecommunications network (R), in which the first unit comprises a first application family (4) and a second application family (3) with network communication capabilities greater than the communication capabiities of the applications of the first family, the method being **characterized by** the following steps:
/a/ a second application family confidence component (8) obtains the statement of a question to be asked of a user of the first unit in the context of the execution of an application (4) of the first family;
/b/ the confidence component displays the question via a user interface (9) and captures an answer from the user; and,
/c/ for at least one answer type from the user, the confidence component transmits to the second unit, via the network, at least one message identifying the displayed question and indicating the captured answer, said message being transmitted under conditions which are inaccessible to the applications of the first family.

2. Method according to Claim 1, in which the question asked is identified in the message from step /c/ by including the question statement in said message.

3. Method according to Claim 1 or 2, in which, for at least one other answer type which translates a refusal of the user in relation to the question asked, the confidence component (8) indicates the refusal to said application (4) of the first family.

4. Method according to Claim 3, in which, for the answer type translating a refusal of the user in relation to the question asked, the confidence component (8) does not transmit the message from step /c/ to the second unit (1).

5. Method according to any one of the preceding claims, in which the second unit (1) validates the answer of the user on receipt of the message transmitted in step /c/ by making sure that it has actually been transmitted under conditions which are inaccessible to the applications of the first family.

6. Method according to Claim 5, in which, following validation of the user's answer, the second unit (1) returns an answer message to the confidence component (8) via the network (R).

7. Method according to Claim 6, in which the confidence component (8) indicates to said application (4) of the first family the content of the answer message received from the second unit (1).

8. Method according to any one of the preceding claims, in which the statement of the question is indicated directly to the confidence component (8) in step /a/ by said application (4) of the first family.

9. Method according to Claim 8, in which said application (4) of the first family indicates an address of the second unit (1) with the statement of the question in step /a/.

10. Method according to any one of Claims 1 to 7, in which step /a/ comprises the following secondary steps:
/a1/ said application (4) of the first family indicates to the confidence component (8) an address of the second unit (1) and a request to be submitted in order to obtain the statement of the question from the second unit;
/a2/ the confidence component transmits the request to the indicated address via the network (R);
/a3/ the confidence component retrieves the statement of the question from an answer to the request returned by the second unit via the network.

11. Method according to Claim 10, in which the request is transmitted by the confidence component (8) in secondary step /a2/ under conditions accessible to the applications of the first family.

12. Method according to Claim 10 or 11, in which the answer to the request returned by the second unit (1) furthermore includes a reference which the confidence component (8) stores then inserts into the message transmitted in step /c/ to identify the question asked.

13. Method according to any one of the preceding claims, in which said application (4) of the first family is a program written in Java language, and the confidence component (8) is incorporated in a virtual Java machine (6) with which the first unit (2) is provided.

14. Method according to any one of the preceding claims, in which the applications (3) of the second family have the capability to access, via the network (R), at least one URL associated with the second unit (1) and inaccessible to the applications (4) of the first family.

15. Method according to any one of Claims 1 to 13, in which the applications (4) of the first family are not capable of accessing the network (R).

16. Method according to any one of Claims 1 to 13, in which the applications (4) of the first family have the capability, in a determined transfer protocol, to access only a single remote site which does not comprise the second unit (1).

17. Method according to any one of Claims 1 to 13, in which each request originating from an application (4) of the second family transmitted on the network (R) and destined for the second unit (1) is forced to include a marking associated with the second application family (3).

18. Method according to any one of Claims 1 to 13, in which each request originating from an application (4) of the second family transmitted on the network (R) and destined for the second unit (1) is forced not to include a marking associated with the first family, said marking being included in at least some of the requests transmitted on the network and originating from applications (3) of the first family.

19. Method according to Claim 17 or 18, in which the requests comprise HTTP requests, and the marking is inserted in the headers of the HTTP requests.

20. Confidence software component for a first unit (2) capable of communicating with a second unit (1) via a telecommunications network (R), the first unit comprising a first application family (4) and a second application family (3) with network communication capabilities greater than the communication capabilities of the applications of the first family, the second application family confidence component (8) including instructions to order the steps of a method according to any one of Claims 1 to 19 during an execution of the component in the first unit.

21. Communications terminal, incorporating a confidence software component according to Claim 20 to communicate with a remote unit (1) via a telecommunications network (R).

## Patentansprüche

1. Kommunikationsverfahren zwischen einer ersten Einheit (2) und einer zweiten Einheit (1) über ein Telekommunikationsnetz (R), bei dem die erste Einheit eine erste Familie von Anwendungen (4) und eine zweite Familie von Anwendungen (3) aufweist, die Kommunikationsfähigkeiten im Netz hat, die über die Kommunikationsfähigkeiten der Anwendungen der ersten Familie hinausgehen,
wobei das Verfahren durch die folgenden Schritte **gekennzeichnet** ist:
/a/ eine Vertrauenskomponente (8), die zur zweiten Familie von Anwendungen gehört, erhält den Wortlaut einer an einen Benutzer der ersten Einheit zu stellenden Frage im Rahmen der Ausführung einer Anwendung (4) der ersten Familie;
/b/ die Vertrauenskomponente präsentiert die Frage mittels einer Benutzerschnittstelle (9) und empfängt eine Antwort vom Benutzer; und
/c/ für mindestens einen Typ von Antwort vom Benutzer überträgt die Vertrauenskomponente über das Netz mindestens eine Mitteilung an die zweite Einheit, die die präsentierte Frage identifiziert und die empfangene Antwort angibt, wobei die Mitteilung unter Bedingungen übertragen wird, die für die Anwendungen der ersten Familie unzugänglich sind.

2. Verfahren nach Anspruch 1, bei dem die präsentierte Frage in der Mitteilung des Schritts /c/ identifiziert wird, indem der Wortlaut der Frage in die Mitteilung eingefügt wird.

3. Verfahren nach Anspruch 1 oder 2, bei dem für mindestens einen anderen Antworttyp, der eine Zurückweisung des Benutzers bezüglich der präsentierten Frage ausdrückt, die Vertrauenskomponente (8) der Anwendung (4) der ersten Familie die Zurückweisung anzeigt.

4. Verfahren nach Anspruch 3, bei dem für den Antworttyp, der eine Zurückweisung des Benutzers bezüglich der präsentierten Frage ausdrückt, die Vertrauenskomponente (8) die Mitteilung des Schritts /c/ nicht an die zweite Einheit (1) überträgt.

5. Verfahren nach einem der vorhergehenden Ansprüche, bei dem die zweite Einheit (1) die Antwort des Benutzers bei Empfang der im Schritt /c/ übertragenen Mitteilung validiert, indem sie sicherstellt, dass sie tatsächlich unter Bedingungen übertragen wurde, die für die Anwendungen der ersten Familie unzugänglich sind.

6. Verfahren nach Anspruch 5, bei dem die zweite Einheit (1) nach Validierung der Antwort des Benutzers eine Antwort-Mitteilung über das Netz (R) an die Vertrauenskomponente (8) zurückschickt.

7. Verfahren nach Anspruch 6, bei dem die Vertrauenskomponente (8) der Anwendung (4) der ersten Familie den Gehalt der Antwort-Mitteilung anzeigt, die sie von der zweiten Einheit (1) empfangen hat.

8. Verfahren nach einem der vorhergehenden Ansprüche, bei dem der Wortlaut der Frage der Vertrauenskomponente (8) im Schritt /a/ direkt von der Anwendung (4) der ersten Familie angezeigt wird.

9. Verfahren nach Anspruch 8, bei dem die Anwendung (4) der ersten Familie eine Adresse der zweiten Einheit (1) mit dem Wortlaut der Frage im Schritt /a/ anzeigt.

10. Verfahren nach einem der Ansprüche 1 bis 7, bei dem der Schritt /a/ die folgenden Unterschritte aufweist:
/a1/ die Anwendung (4) der ersten Familie zeigt der Vertrauenskomponente (8) eine Adresse der zweiten Einheit (1) sowie eine vorzulegende Anfrage an, um den Wortlaut der Frage von der zweiten Einheit zu erhalten;
/a2/ die Vertrauenskomponente sendet die Anfrage über das Netz (R) an die angezeigte Adresse;
/a3/ die Vertrauenskomponente erlangt den Wortlaut der Frage in einer Antwort auf die Anfrage, die von der zweiten Einheit über das Netz zurückgeschickt wird.

11. Verfahren nach Anspruch 10, bei dem die Anfrage von der Vertrauenskomponente (8) im Unterschritt /a2/ unter Bedingungen gesendet wird, die für die Anwendungen der ersten Familie zugänglich sind.

12. Verfahren nach Anspruch 10 oder 11, bei dem die Antwort auf die Anfrage, die von der zweiten Einheit (1) zurückgeschickt wird, außerdem eine Referenz enthält, die die Vertrauenskomponente (8) speichert und dann in die im Schritt /c/ übertragene Mitteilung einfügt, um die präsentierte Frage zu identifizieren.

13. Verfahren nach einem der vorhergehenden Ansprüche, bei dem die Anwendung (4) der ersten Familie ein Programm ist, das in der Programmiersprache Java geschrieben ist, und die Vertrauenskomponente (8) in eine virtuelle Java-Maschine (6) eingefügt ist, mit der die erste Einheit (2) versehen ist.

14. Verfahren nach einem der vorhergehenden Ansprüche, bei dem die Anwendungen (3) der zweiten Familie die Fähigkeit haben, über das Netz (R) zu mindestens einer URL zu gelangen, die der zweiten Einheit (1) zugeordnet und für die Anwendungen (4) der ersten Familie unzugänglich ist.

15. Verfahren nach einem der Ansprüche 1 bis 13, bei dem die Anwendungen (4) der ersten Familie nicht in der Lage sind, ins Netz (R) zu gelangen.

16. Verfahren nach einem der Ansprüche 1 bis 13, bei dem die Anwendungen (4) der ersten Familie in einem bestimmten Transferprotokoll die Fähigkeit haben, nur zu einer einzigen fernen Internetseite zu gelangen, die nicht die zweite Einheit (1) aufweist.

17. Verfahren nach einem der Ansprüche 1 bis 13, bei dem jede von einer Anwendung (4) der zweiten Familie stammende und über das Netz (R) an die zweite Einheit (1) gesendete Anfrage gezwungen wird, eine Markierung zu enthalten, die der zweiten Familie von Anwendungen (3) zugeordnet ist.

18. Verfahren nach einem der Ansprüche 1 bis 13, bei dem jede von einer Anwendung (4) der zweiten Familie stammende und über das Netz (R) an die zweite Einheit (1) gesendete Anfrage gezwungen wird, keine der ersten Familie zugeordnete Markierung zu enthalten, wobei die Markierung in zumindest manchen der über das Netz gesendeten und von Anwendungen (3) der ersten Familie stammenden Anfragen enthalten ist.

19. Verfahren nach Anspruch 17 oder 18, bei dem die Anfragen HTTP-Anfragen enthalten und die Markierung in die Vorspanne der HTTP-Anfragen eingefügt ist.

20. Software-Vertrauenskomponente für eine erste Einheit (2), die in der Lage ist, über ein Telekommunikationsnetz (R) mit einer zweiten Einheit (1) zu kommunizieren, wobei die erste Einheit eine erste Familie von Anwendungen (4) und eine zweite Familie von Anwendungen (3) aufweist, die Kommunikationsfähigkeiten im Netz hat, die über die Kommmunikationsfähigkeiten der Anwendungen der ersten Familie hinausgehen, wobei die Vertrauenskomponente (8) zur zweiten Familie von Anwendungen gehört und Anweisungen enthält, um bei einer Ausführung der Komponente in der ersten Einheit die Schritte eines Verfahrens nach einem der Ansprüche 1 bis 19 zu steuern.

21. Kommunikationsterminal, das eine Software-Vertrauenskomponente nach Anspruch 20 enthält, um über ein Telekommunikationsnetz (R) mit einer fernen Einheit (1) zu kommunizieren.
